# EUROPEAN PATENT APPLICATION

(11) **EP 1 103 327 A1**
(43) Date of publication of application: **30.05.2001**
(21) Application number: 99830732.6
(22) Date of filing: 25.11.1999
(51) Int. Cl.: B23B 5/04

(54) **Methods of machining a braking surface on a brake rotor**

(71) Applicant: SKF INDUSTRIE S.p.A., 10123 Torino (IT)
(72) Inventor: Loustanau, Jean Gerard, 10064 Pinerolo (Torino) (IT); Ducci, Domenico, 10020 Marentino (Torino) (IT); Caldana, Marcus, 53155 Lidkoeping (SE)
(74) Representative: Fioravanti, Corrado

(57) **Abstract**

A brake rotor (16) having at least one braking surface (161, 162) to be machined is coupled for rotation with a hub-bearing unit comprising a flanged, non-rotating outer bearing race (13) and a flanged rotatable inner hub (11). The assembly comprised of the brake rotor and the hub-bearing unit is positioned in a machining apparatus holding the outer race (13) to orient the rotation axis (x) of the assembly in a determined direction. Then, the hub and the brake rotor are rotated relative to the stationary outer race about the axis (x) while applying an axial load (F) against a flange (16a) of the brake rotor so as to simulate the tightening force exerted in use by the wheel mounting bolts (15). At least one of the braking surfaces (161, 162) is machined, thereby obtaining a finished braking surface oriented in a predetermined manner with respect to the bearing outer race.

## Description

The present invention refers to a method of machining a braking surface of a brake rotor of a motor vehicle; the invention further relates to a method of machining a surface of a flange of a vehicle wheel hub.

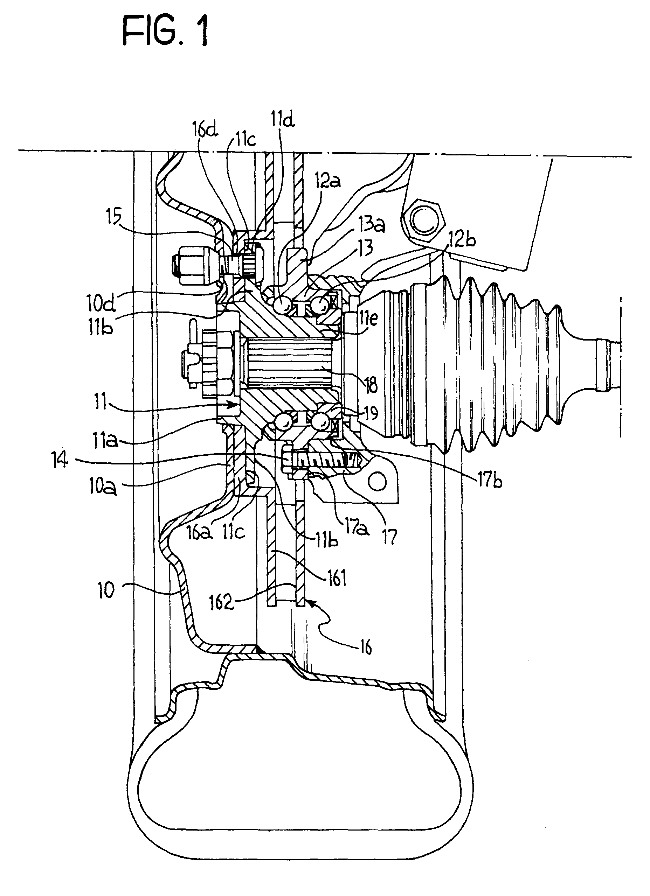

Referring to FIG.1 of the attached drawings, a wheel rim 10 forms a radial flange 10a defining an inner edge 10b adapted for resting and centring the wheel on the outer surface of an outwardly axially extending cylindrical portion lla of a hub 11. The hub 11 forms an outwardly extending radial flange llb and a central tubular portion 11k forming one of the radially inner raceways of a rolling bearing with a dual set of rolling elements 12a, 12b. A separate race element 19 forms the radially inner raceway for the set of rolling elements 12b. The bearing further comprises a stationary outer race 13 forming an outwardly extending radial flange 13a in which there are obtained axial bores 13b for receiving bolts 14 to fasten the bearing to a suspension standard 17.

The radial flange 11b of the hub has an axially outer radial surface 11c and a plurality of axial bores lid for receiving bolts 15 for mounting the wheel 10.

A brake rotor 16 forms an outwardly extending radial flange 16a with axial bores 16d aligned with the axial bores 10d obtained in the wheel rim 10 to allow the passage of the fastening bolts 15. The tightening of the bolts 15 clamps together the rim flange 10a, the rotor flange 16a and the hub flange 11b. Through the centre of the hub 11 there is formed a splined bore lie adapted to receive a splined shaft 18 driving the wheel for rotation.

According to the prior art, the method of machining and mounting the components constituting the above discussed wheel assembly provides that firstly the complete hub-bearing unit already finished is mounted to the suspension standard 17. Particularly, the finishing operation has to be accurate on the hub flange surface 11c which serves as an axial rest for the brake flange 16a. Then, the brake rotor 16 with the opposite sides of its flange 16a and its opposite braking surfaces 161, 162 already accurately machined is inserted onto the cylindrical portion 11a of the hub. After that, the wheel rim is inserted over the portion 11a and finally the bolts 15 are tightened through the aligned bores 10d, 16d and lid.

With this approach, the orientation of the braking surfaces of the brake rotor with respect to the rotation axis of the bearing is affected by manufacturing tolerances of the various components of the assembly and possible mounting errors. Therefore, when the wheel assembly is mounted, the braking surfaces are not precisely oriented perpendicular to the rotation axis of the bearing. In fact, besides being affected by constructional planarity errors of the facing flanges of the hub and the brake rotor, the planarity of the hub flange and especially of the brake flange is jeopardised by deformation caused by the tightening of the bolts 15, which generates undulations in said radial surfaces.

Planarity errors and non-perpendicular braking surfaces and flange surfaces with respect to the rotation axis of the bearing determine the so-called lateral runout of the brake, which is undesirable as it provokes excessive vibration, brake shudder and irregular or premature wear of the brake pads. With present techniques, the lateral runout ranges between 90 and 100 µm.

U.S. Patent No. 5,430,926 discloses a method of producing a brake rotor and a bearing assembly wherein a brake rotor having a braking surface and a hub portion is firstly machined at the bore of the hub. A bearing unit is then installed in the bore of the hub portion. The bearing unit includes an outer race which engages the bore and a rotatable inner race. The assembly comprised of the brake rotor and the bearing unit is then mounted on a machining apparatus supporting the assembly by the inner race of the bearing unit. Using the machining apparatus, the braking surface of the brake rotor is machined.

U.S. Patent No. 5,842,388 proposes a method of machining a wheel hub and a brake component coupled by bolts. The braking surface is machined together with a cylindrical surface of the hub for seating a bearing.

It is an object of the present invention to provide a high efficiency method capable of reducing the lateral runout of the braking surface to a minimum, regardless of the manufacturing tolerances of the wheel assembly components and independently of mounting errors and deformation caused by the tightening of the wheel mounting bolts.

This object is accomplished, in accordance with the present invention, by a method as defined in claim 1.

It is another object of the present invention to provide a method capable of reducing to a minimum the lateral runout of the outer surface of the hub flange serving as a rest for the brake rotor and the wheel rim.

This other object is accomplished, in accordance with the present invention, by a method as defined in claim 5.

The features and the advantages of the invention will appear from the detailed description of the few embodiments thereof, given by way of example, reference being made to the accompanying drawings, in which:
- FIG.1 is a partial axial cross sectional view of a wheel assembly manufactured and mounted according to the prior art;
- FIG.2 is an axial cross sectional view showing the machining of the braking surfaces of a hub-bearing-brake assembly, in accordance with a first method of this invention; and
- FIG.3 is an axial cross sectional view showing the machining of a surface of a hub-bearing unit, in accordance with a second method of this invention.

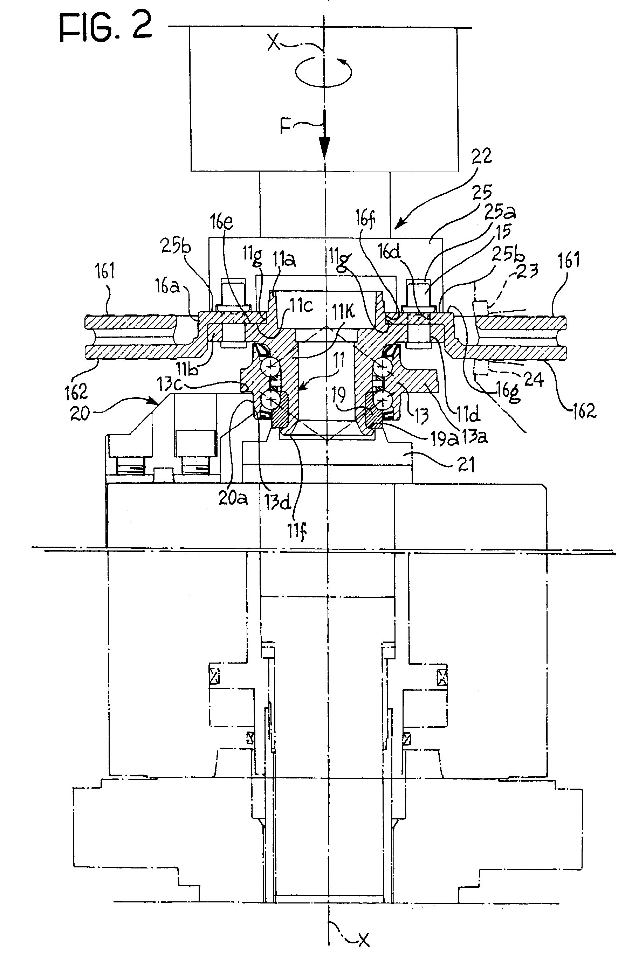

Referring to FIG.2, there is preassembled an assembly comprised of a brake rotor 16, in this example of disc-type, and a hub-bearing unit for a driving wheel, of the kind with a stationary outer race 13 as discussed in the introductory part of the description.

The outer race 13 forms an outer radial flange 13a for mounting to the suspension (not shown) of a motor vehicle, and the outer raceways for a dual set of rolling elements, rollers or balls, 12a, 12b. The inner raceways are formed by the hub 11 and a separate race element 19 axially locked to the hub for example by cold forming an axially inner rim 11f of the hub. Cold forming of rim 11f is performed applying an axial load to the inner race element 19 in order to obtain an axially preloaded hub-bearing unit. Designated at 19a is the axially inner side of race element 19.

The radial flange 13a of the outer race 13 provides an axially inner radial surface 13c that in use abuts against a radial surface 17a of the suspension (as shown in FIG.1). Proximate to the flange 13a, the outer race provides an outer cylindrical surface 13d adapt for fitting in a seating bore of the suspension, as indicated at 17b in FIG.1.

The hub 11 forms a tubular central portion 11k and an outwardly extending radial flange 11b with an axially outer side 11c. The hub further forms an axially outwardly protruding cylindrical portion 11a with an outer cylindrical surface 11g.

The axially inner side 16e of the brake rotor flange 16a rests against the side 11c of he hub flange 11b.

The brake rotor 16 and the hub 11 are coupled for rotation for example by studs 15 (or, as will be described herein after, by means of another element) inserted in the aligned bores 16d and lid of flanges 16a and 11b. The bores 16d of the brake rotor (visible in FIG.1) are preferably sized so as to have a slight radial play with respect to the studs 15, such that the centring of the brake rotor with respect to the hub is determined by the contact of the inner edge 16f of the brake flange 16a with the outer surface 11g of the cylindrical portion 11a, and not by the tightening of the bolts 15, which is accomplished after the machining described hereafter.

In order to machine the braking surfaces 161 and 162 of the brake rotor, the preassembled hub-bearing-brake assembly is installed on a machining apparatus provided with a plurality of non-rotating tailstocks 20, a thrust bearing plate 21 and a rotating collet 22.

Preferably three tailstocks 20 are provided angularly spaced 120 degrees therebetween, only one being shown in FIG.2. The tailstocks 20 act against the outer cylindrical surface 13d of the outer race 13 for centring the assembly with respect to the axis of rotation of the collet 22. The tailstocks 20 have axial engaging surfaces 20a for engaging the outer bearing race 13 so as to represent the datum of the cylindrical seat 17b of the vehicle suspension in which the assembly will be mounted.

The assembly rests by means of the outer side 19a of the inner rotating ring 19 against the upper part of the thrust bearing plate 21, idly mounted for rotation about the bearing axis x.

The rotating collet 22 serves to drive the brake rotor 16, the hub 11 and the inner race element 19 for rotation with respect to the outer race 13 so that the cutting tools schematically designated 23 and 24 in FIG.2 can finish the braking surfaces 161 and 162 of the brake rotor. In the embodiment depicted in FIG.2, the rotational motion is imparted by the collar 22 through a fashioned element 25 forming lower recesses 25a adapted for engaging the bolts 15 so as to rotate the rotatable parts of the assembly.

Fashioned element 25 provides a lower end surface 25b for axially abutting the axially outer surface 16g of the brake rotor flange upon lowering the collet 22 so as to apply an axial load F in the vicinity of the studs 15. The end surface 25b is suitably shaped so as to reproduce the contact pattern of the wheel rim, thereby simulating the action exerted in use by the wheel rim against the brake rotor once the wheel bolts 15 are tightened (as shown in FIG.1). The axial load F preferably ranges between 7,800 and 100,000 N, and it is selected considering the size of the bearing as to provoke an elastic deformation of the hub flange and the brake rotor flange being equal or corresponding to the deformation caused by the tightening of the bolts when mounting the wheel on the vehicle. In any case, the load F must not be so high as to cause deformation in the raceways of the hub-bearing unit.

The braking surfaces are then finished by rotating the brake rotor about the axis of rotation defined by the position of the outer race 13; therefore, the braking surfaces are finished perpendicular with respect to the geometrical axis about which the assembly will rotate in use.

According to a variant embodiment (not shown), instead of using studs 15, the brake rotor and the hub may be coupled for rotation by one or more portions projecting from the bottom of the collet 22 and engaging the aligned bores lid and 16d of the hub and the brake. When the coupling for rotation is accomplished in this manner, or by means of studs or provisional pins, whereby the brake rotor can be removed from the hub bearing unit at the end of the machining step, before these components are separated it is preferable to leave a reference sign on each component indicating the relative angular position thereof in which the machining has been carried out, in order to re-establish such relative orientation when mounting the assembly on the vehicle.

As will be appreciated, the accuracy with which the braking surfaces are machined is independent of the manufacturing and mounting tolerances of the components constituting the assembly. Particularly, the outer surface 11c of the hub flange 11b and the brake rotor surfaces 16e and 16g need not be machined. The lateral runout of the braking surfaces can so be kept within a 10-15 µm range, i.e. much lower as compared to prior art.

Moreover it will be appreciated that the centring of the brake rotor is determined with accuracy by the coupling of the inner edge 16f of the brake flange with the outer surface 11g of the hub cylindrical portion 11a, and not by the bolts 15 tightening such flanges together.

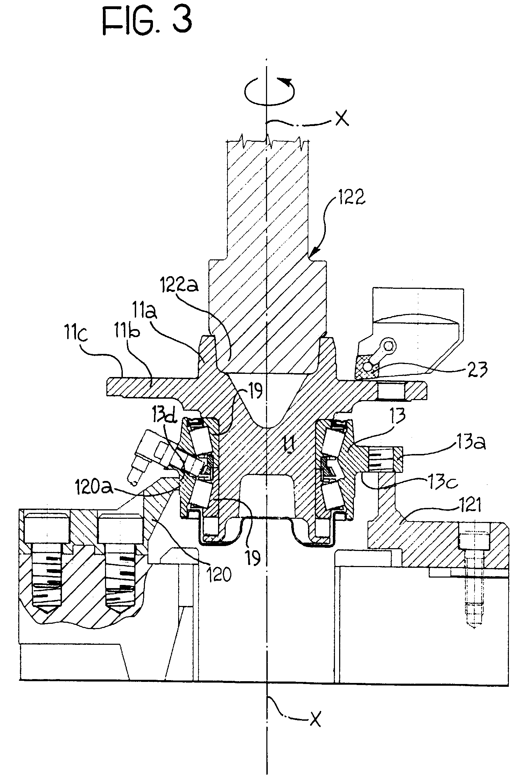

Referring now to FIG.3, the same principle used in the above discussed machining method may also be exploited, still in accordance with the present invention, to keep within tight tolerances the lateral runout of the axially outer surface 11c of the radial hub flange 11b of a hub-bearing unit. The surface 11c serves as an axial rest for the brake member and must therefore define a surface possibly free of planarity errors so as to avoid or at least reduce the drawbacks cited in the introductory part of the description.

Although the lateral runout of a hub flange dose not affect the accuracy of a braking surface machined in accordance with the method above discussed with reference to FIG.2, such a tolerance may nevertheless be important in those instances where the original brake rotor has to be replaced after a period of use with a new brake rotor.

A preassembled and axially preloaded hub-bearing unit is located on a machining apparatus provided with a plurality of stationary radial and axial tailstocks 120, 121, and a rotating collet 122.

Similarly to what already discussed with reference to the embodiment of FIG.2, the radial tailstocks 120, only one of which is shown for simplicity in FIG.3, are preferably in number of three, angularly spaced 120 degrees therebetween. The radial tailstocks 120 act against the outer cylindrical surface 13d of the outer race 13 for centring the hub-bearing unit with respect to the axis of rotation of the collet 122. The tailstocks 120 have axial engaging surfaces 120a for engaging the outer bearing race 13 so as to represent the datum of the cylindrical seat 17b of the vehicle suspension in which the unit will be mounted.

In the embodiment shown in FIG.3 there are provided three axial tailstocks 121 (only being shown in the drawing), located angularly spaced 120 degrees therebetween with respect to the axis of rotation of the collet 112 and angularly offset about 60 degrees relative to the radial tailstocks 120. The axial tailstocks may also be arranged in a number or shape different from what is shown in FIG.3, as far as they provide three or more steady axial resting points around the axis x for the axially inner surface of the radial flange 13a of outer bearing race 13, so as to represent the datum offered in use by the axial surface 17a of the suspension (FIG.1).

It should be noticed that in the example of FIG.3, the inner raceways are formed by a pair of inner race elements 19. It is to be understood that the present invention, in all its possible embodiments, can be equally applied both to hub-bearing units in which one of the radially inner raceways is obtained directly on the hub (as shown in FIGs .1 and 2) and to units in which the inner raceways are formed by race elements produced separately and then fitted onto the hub.

The rotating collet 122 serves to drive the hub 11 and the inner race elements 19 for rotation with respect to the outer race 13 so that a cutting tool 23 can finish the axially outer surface llc of the hub flange 11b.

To impart rotary motion to the rotatable parts of the hub-bearing unit, the collet 122 provides a lower head portion 122a for engaging the hub, in this example by engaging the annular protruding hub portion lla. The engaging head 122a may also be shaped differently form the embodiment here shown. In any case, the collet head 122a should grip the hub with a moderate force or anyway in such manner so as not to generate stresses in the hub which provoke appreciable elastic deformation of the flange 11b. Otherwise, the cutting tool 23 would finish the hub flange side llc with a surface that would not result planar once the head 122a is removed from the unit being machined.

So, the surface 11c is machined by rotating the hub about the rotation axis defined by the position of the outer race 13, whereby this surface, once finished, is perpendicular with respect to the geometrical axis about which the hub will rotate in use.

Again, it will be appreciated that the accuracy with which the surface 11c is machined is independent of the manufacturing and mounting tolerances of the components constituting the hub-bearing unit. The lateral runout of the surfaces llc can so be kept within a 10-15 µm range.

While specific embodiments of the invention have been disclosed, it is to be understood that such disclosure has been merely for the purpose of illustration and that the invention is not to be limited in any manner thereby. Various modifications will be apparent to those skilled in the art in view of the foregoing examples. For example, the invention is equally applicable to hub-bearing units with rollers or balls. Similarly, as to the method illustrated with reference to FIG.2, the invention is applicable for finishing the cylindrical braking surface of a drum-type of brake rotor.

## Claims

1. A method of machining a braking surface of a brake rotor (16) of a motor vehicle, comprising the steps of:
- (a1) providing a brake rotor (16) having
an inwardly extending radial flange (16a) with a plurality of bores (16d) for receiving wheel mounting bolts (15), said brake flange (16a) defining an inner edge (16f) and
at least one braking surface (161, 162) to be machined;
- (a2) providing a hub-bearing unit comprising:
a stationary outer bearing race (13) forming at least one outwardly extending radial flange (13a) and an outer cylindrical surface (13d) for mounting the unit into a cylindrical seat (17b) of a vehicle suspension standard (17);
a rotating hub (11) having a central tubular portion (11k), an outwardly axially protruding cylindrical portion (11a) defining an outer cylindrical surface (11g), and an outwardly extending radial flange (11b) with a plurality of bores (11d) for receiving said wheel mounting bolts (15);
- (b) locating the brake rotor (16) onto the hub (11) by centring the inner edge (16f) of the brake flange on the outer cylindrical surface (11g) of the axially protruding cylindrical portion (11a) of the hub (11), and coupling for rotation the brake rotor to the hub;
- (c) holding the stationary outer race (13) in a determined position by means of non-rotating retaining means (20) of a machining apparatus to orient the rotation axis (x) of the assembly comprised of the brake rotor and the hub-bearing unit in a determined direction;
- (d) rotating the hub (11) and the brake rotor (16) relative to the stationary outer race (13) about said rotation axis (x) while applying an axial load (F) against the brake rotor flange (16a), the axial load corresponding to the tightening action exerted in use by the wheel mounting bolts (15); and
- (e) simultaneously machining at least one of the braking surfaces (161, 162), thereby obtaining at least one finished braking surface oriented in a predetermined manner with respect to the bearing outer race (13).

2. A method according to claim 1, wherein said axial load (F) is applied by means of a rotating element (25) having an end surface (25b) so shaped as to engage the brake rotor flange (16a) according to the contact pattern provided in use by a wheel rim (10).

3. A method according to claim 1, wherein said steps (c, d, e) further comprise the step of:
- axially supporting an essentially radial surface (19a) fast for rotation with the hub (11) and the brake rotor (16) by means of a thrust bearing plate (21) free to rotate about the rotation axis (x) of said assembly.

4. A method according to claim 1, wherein said step (b) of coupling the brake rotor (16) for rotation with the hub (11) comprises the steps of:
- (b1) orienting the brake rotor and the hub relatively therebetween to axially align said respective bores (16d, 11d), and
- (b2) inserting at least one bolt fastening element (15) through at least one of said axially aligned bores (16d, 11d).

5. A method of machining a surface (11c) of a radial flange (11b) of hub-bearing unit, comprising the steps of:
- (a) providing a hub-bearing unit comprising:
a stationary outer bearing race (13) forming at least one outwardly extending radial flange (13a) and an outer cylindrical surface (13d) for mounting the unit into a cylindrical seat (17b) of a vehicle suspension standard (17);
a rotating hub (11) having a central tubular portion (11k) and an outwardly extending radial flange (11b) for mounting the hub to a brake rotor (16), the hub flange (11b) defining an axially outer radial surface (11c) ;
- (b) holding the stationary outer race (13) in a determined position by means of non rotating retaining means (120) of a machining apparatus to orient the rotation axis (x) of the hub-bearing unit in a determined direction;
- (c) rotating the hub (11) relative to the stationary outer race (13) about said rotation axis (x); and
- (d) simultaneously machining at least a portion of said outer surface (llc) of the hub flange (11b), thereby obtaining a finished surface oriented perpendicular with respect to the bearing outer race (13).

6. A method according to claim 5, wherein said step (b) comprises the step of:
- (b1) holding the stationary outer bearing race (13) by means of radial retaining means (120) engaging said outer cylindrical surface (13d) of the outer race (13).

7. A method according to claim 5, wherein said step (b) comprises the step of:
- (b2) holding the stationary outer bearing race (13) by means of axial retaining means (121) engaging an essentially radial surface (13c) of the outer race (13).

8. A method according to claim 7, wherein said essentially radial surface (13c) is formed by said radial flange (13a) of the outer race (13).

9. A method according to claim 5, wherein said rotating hub (11) further comprises an outwardly axially protruding cylindrical portion (11a), and wherein the hub is rotated in said steps (c) and (d) by means of a rotating element (122) having an engaging portion (122a) adapted for engaging said annular portion (11a) of the hub; said engaging portion (122a) engaging the hub with a force controlled so as not to generate in the hub stresses provoking appreciable elastic deformation of the hub flange (11b).
